# FASCICULE DE BREVET EUROPEEN

(11) **EP 0 887 577 B1**
(45) Date de publication et mention de la délivrance du brevet: **27.08.2003**
(21) Numéro de dépôt: 98401538.8
(22) Date de dépôt: 23.06.1998
(51) Int. Cl.: F16J 15/08

(54) **Joint d'étanchéité du type métallique composite à ressorts et son procédé de fabrication**
Metallische Verbundfederdichtung und ihr Herstellungsverfahren
Metallic composite spring seal and its manufacturing procedure

(30) Priorité: 25.06.1997 FR 9707923
(43) Date de publication de la demande: 30.12.1998
(73) Titulaire: COMMISSARIAT A L'ENERGIE ATOMIQUE, 75015 Paris (FR)
(72) Inventeur: Caplain, Philippe, 26130 Saint-Paul Trois Châteaux (FR); Rouaud, Christian, 07700 Bourg-Saint-Andéol (FR)
(74) Mandataire: Poulin, Gérard

(56) Documents cités:
- EP-A- 0 378 436
- CH-A- 314 987
- DE-A- 2 256 487
- DE-A- 2 527 389
- FR-A- 2 180 400
- FR-A- 2 524 113
- GB-A- 2 041 112
- US-A- 1 490 716

## Description

La présente invention concerne un joint d'étanchéité du type métallique composite à ressort. Elle concerne également un procédé de fabrication d'un tel joint.

Dans le domaine de l'étanchéité statique comprenant par exemple les assemblages de type boulonnés ou raccords vissés avec joint, il s'est développé, durant ces trente dernières années, des joints toriques métalliques flexibles basés sur la séparation des fonctions mécaniques d'élasticité et d'étanchéité. Ce principe a conduit à utiliser comme âme élastique un tube fermé ou un tube ouvert (section en forme de C) réalisés le plus souvent dans des matériaux ressort à haute limite élastique, et à envelopper ce dispositif élastique soit de feuilles minces indépendantes en métal ductile, soit d'un revêtement de surface adhérant directement sur le substrat. Il existe aussi un joint torique composite dont le corps central est un ressort hélicoïdal à spires jointives fermé sur lui-même et enveloppé extérieurement d'une feuille métallique (joint « Hélicoflex » de CEFILAC).

Cette conception conduit à des joints très performants sous l'aspect étanchéité, mais pour une augmentation des efforts de serrage que l'on peut situer dans un rapport 5 à 40 fois supérieur à celui des joints toriques en élastomère. La diminution éventuelle des efforts se faisant bien évidemment aux dépens du niveau d'étanchéité.

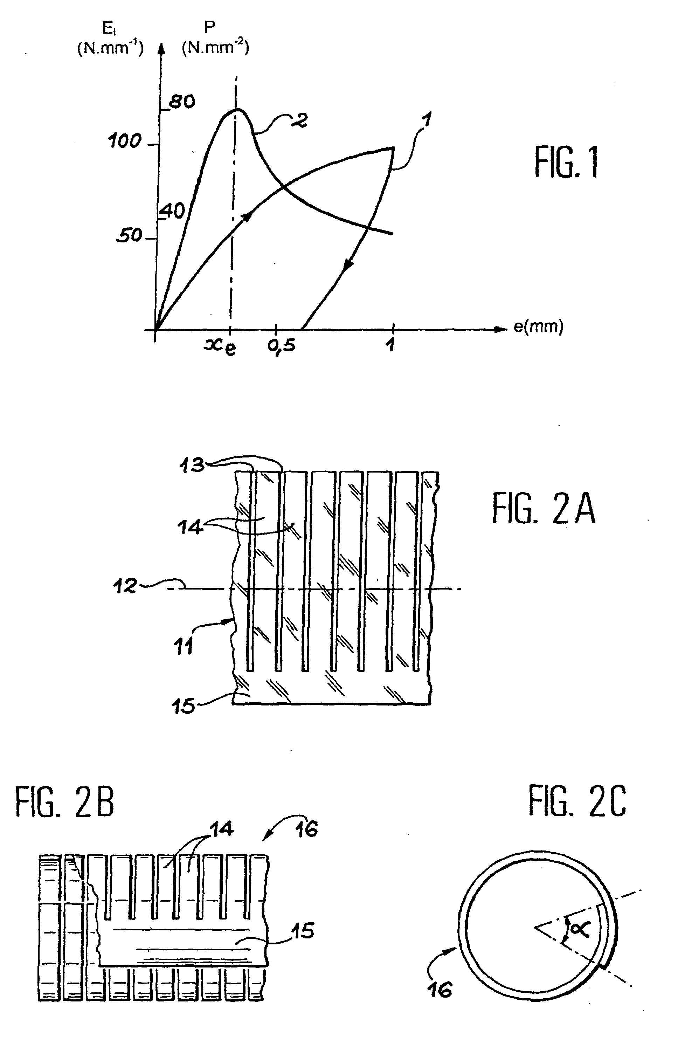

Si l'on examine le comportement mécanique de ces joints, c'est-à-dire si on mesure la relation existant entre l'effort linéique E₁ que l'on exerce sur le joint pour le serrer et son écrasement e, on obtient une courbe caractéristique, telle que la courbe 1 représentée sur le diagramme de la figure 1. Si l'on superpose sur ce même diagramme la variation de la pression spécifique de contact P, c'est-à-dire le rapport entre l'effort linéique et la largeur de contact entre le joint et la portée d'étanchéité, on enregistre une courbe en cloche telle que la courbe 2 représentée sur le diagramme de la figure 1. La courbe 2 montre que la pression spécifique augmente très rapidement dans les premiers dixièmes d'écrasement du joint, passe par un maximum et décroît ensuite très rapidement. Ceci est un inconvénient majeur car il y a risque de dégradation de l'étanchéité pour un écrasement compatible avec les tolérances habituelles du logement de joint.

Tous ces joints métalliques, qui ont une âme élastique torique, ont donc un point commun qui est que leur section s'ovalise sous l'effet de l'effort exercé. Cette ovalisation conduit, du fait de l'augmentation du rayon de courbure (expression de Hertz), à accroître la surface de contact entre le joint et sa portée, donc à diminuer la pression spécifique de contact. En effet, au delà d'une valeur xₑ d'écrasement (voir la figure 1), la courbe 1 voit sa pente s'infléchir très rapidement alors que le rayon de courbure augmente.

Le document FR-A-2 180 400 divulgue un joint torique d'étanchéité du type métallique composite, conforme au préambule des revendications 1 et 4, et possédant un corps central métallique creux en forme de tore et un léger revêtement notamment en métal, le corps central étant constitué d'une partie en forme de C et d'une partie comprenant des languettes séparées par des fentes.

La présente invention a été conçue pour remédier à l'ovalisation de la section torique des joints d'étanchéité du type métallique composite à ressort en cours d'écrasement. Elle remédie donc à la diminution de pression de contact de manière à bénéficier d'un faible effort global.

De façon plus précise, l'objectif est de parvenir à annuler, voire à inverser, l'évolution du rayon de courbure aux points de contact joint/portée de joint de l'élément élastique soumis à un effort radial. En effet, le serrage d'un joint à section en forme de C entraîne une ovalisation du cercle générateur, se traduisant en particulier par une augmentation du rayon de courbure du C au niveau des points de contact joint/portée de joint. L'évolution de ce rayon de courbure est alors une fonction croissante monotone de l'effort de serrage.

La revendication 1 décrit une première variante de réalisation d'un joint torique d'étanchéité selon l'invention.

Selon l'invention, l'effet d'enroulement des spires sur elles-mêmes entraîne une diminution du rayon de courbure du corps central au niveau des points de contact joint/portée de joint. L'évolution de ce rayon de courbure est alors une fonction décroissante monotone de l'effort de serrage.

Le joint torique d'étanchéité selon la présente invention est fonctionnellement différent d'un joint utilisant comme âme élastique un tube ouvert à section en forme de C, même lorsque le C est pratiquement fermé. Dans ce cas, l'effet procuré par l'invention ne peut être obtenu car cela entraînerait, lors du serrage de ce joint selon l'art connu, un rétreint du métal (ou un allongement suivant la position de l'axe du joint) au niveau de la fermeture des deux extrémités du C). L'invention montre donc qu'il faut disposer d'une discontinuité circonférentielle de l'élément élastique pour favoriser la fermeture de la section dû corps central sur elle-même. Cette discontinuité se réalise si les moyens formant ressort spiral présentent des spires juxtaposées et disjointes. Dans cette configuration, le fonctionnement du corps central peut être assimilé au niveau de chaque spire à la déformation d'un ressort spiral.

Les bandes parallèles peuvent être reliées entre elles par une continuité métallique. On peut ainsi obtenir une forme en peigne pour le corps central lorsque celui-ci est déployé à plat.

La revendication 4 décrit une deuxième variante de réalisation d'un joint torique d'étanchéité selon l'invention.

L'invention a aussi pour objet un procédé de fabrication d'un joint torique d'étanchéité du type métallique composite, comprenant une étape de réalisation d'un corps central métallique creux en forme de tore et une étape consistant à envelopper ce corps central d'au moins une feuille métallique, caractérisé en ce que l'étape de réalisation du corps central comporte les opérations suivantes :
- découpe partielle d'une feuille métallique de dimensions appropriées pour obtenir des bandes parallèles réunies entre elles par une continuité métallique disposée perpendiculairement auxdites bandes,
- enroulement de la feuille métallique sur elle-même autour d'un axe parallèle à la feuille métallique et perpendiculaire auxdites bandes pour obtenir un cylindre et jusqu'à recouvrement des bandes sur elles-mêmes,
- réunion des deux extrémités du cylindre pour obtenir la forme en tore du corps métallique central.

L'invention a enfin pour objet un procédé de fabrication d'un joint torique d'étanchéité du type métallique composite, comprenant une étape de réalisation d'un corps central métallique creux en forme de tore et une étape consistant à envelopper ce corps central d'au moins une feuille métallique, caractérisé en ce que l'étape de réalisation du corps central comporte les opérations suivantes :
- mise en forme d'une longueur de fil métallique pour obtenir une configuration en lacet comportant des parties rectilignes sensiblement parallèles entre elles, lorsque la longueur de fil est à plat, et des parties de liaison pour relier chaque partie rectiligne à la partie rectiligne précédente et à la partie rectiligne suivante,
- enroulement de la configuration obtenue précédemment sur elle-même, autour d'un axe parallèle à la longueur de fil formé et perpendiculaire auxdites parties rectilignes pour obtenir un cylindre avec enchevêtrement alterné des parties de liaison,
- réunion des deux extrémités du cylindre pour obtenir la forme en tore du corps métallique central.

L'invention sera mieux comprise et d'autres détails et particularités apparaîtront à la lecture de la description qui va suivre, donnée à titre d'exemple non limitatif, accompagnée des dessins annexés parmi lesquels :
- la figure 1 est un diagramme illustrant les caractéristiques d'un joint d'étanchéité selon l'art antérieur,
- les figures 2A, 2B et 2C sont illustratives d'une première variante de corps central pour joint torique d'étanchéité selon la présente invention,
- les figures 3A, 3B et 3C sont illustratives d'une deuxième variante de corps central pour joint torique d'étanchéité selon la présente invention,
- la figure 4 est une vue partielle en coupe d'un joint d'étanchéité selon la présente invention,
- la figure 5 est un diagramme illustrant les caractéristiques d'un joint d'étanchéité selon la présente invention.

Selon une première variante de réalisation, le corps central de joint torique peut être réalisé à partir d'une feuille métallique découpée, comme celle représentée à la figure 2A. Cette figure montre une feuille 11, par exemple en acier, présentant un axe longitudinal 12. Des découpes 13 ont été effectuées dans la feuille 11, perpendiculairement à l'axe 12 et à partir d'un même bord de la feuille. On obtient ainsi une série de bandes parallèles 14 de même largeur. Deux bandes consécutives sont séparées par une distance déterminée correspondant à la découpe 13. Les découpes 13 laissent subsister une continuité métallique (ou talon) 15. La feuille métallique découpée a donc la forme d'un peigne de faible épaisseur, avec un talon réduit à la largeur minimale dont la fonction est de rendre les bandes 14 mécaniquement solidaires afin de les répartir uniformément sur la circonférence du tore. Ce talon peut se situer ailleurs qu'en périphérie, par exemple au milieu du peigne.

Par enroulement de la feuille métallique 11 sur elle-même autour de l'axe 12, on obtient un cylindre 16 dont la figure 2B montre une vue latérale. L'enroulement est réalisé de façon à obtenir un recouvrement partiel du métal de la feuille. Ce recouvrement est mieux visible sur la figure 2C qui est une vue du cylindre 16 selon l'une de ses extrémités. Ce recouvrement, occupant un angle α, est indispensable pour amorcer l'enroulement du ressort spiral sur lui-même, par diminution du développé du cercle générateur.

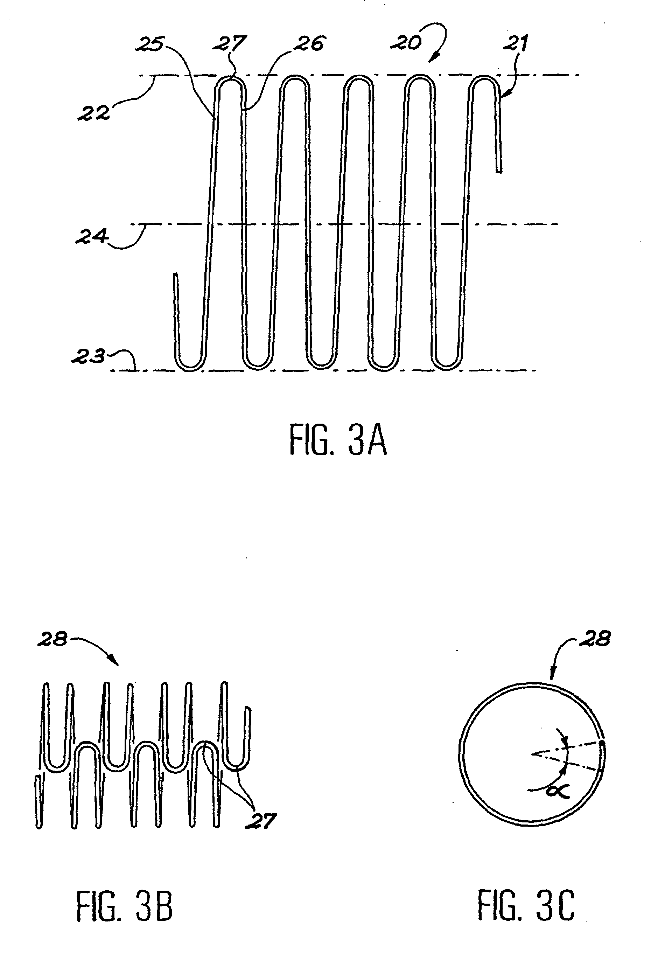

Selon une deuxième variante de réalisation, le corps central de joint torique peut être réalisé à partir d'un fil métallique, par exemple en acier, de section circulaire. Le fil est d'abord mis en forme sur une surface plane pour obtenir la configuration en lacet 20 représentée à la figure 3A. Cette figure montre que la configuration en lacet du fil métallique 21 est réalisée entre les deux axes parallèles 22 et 23 situés de part et d'autre de l'axe central 24. Chaque boucle de la configuration en lacet comporte des parties rectilignes 25 et 26 sensiblement parallèles entre elles, donc sensiblement perpendiculaires à l'axe 24, réunies par une partie de liaison 27 de longueur réduite.

Par enroulement de la configuration en lacet 11 sur elle-même autour de l'axe 24, on obtient un cylindre 28 dont la figure 3B montre une vue latérale. L'enroulement est réalisé de façon à obtenir un enchevêtrement alterné des parties de liaison 27.

La figure 3C est une vue du cylindre 28 selon l'une de ses extrémités. Elle permet de montrer l'angle α correspondant à l'interpénétration des parties rectilignes.

Les cylindres obtenus, selon l'une et l'autre variante, sont ensuite déformés de manière à réunir leurs extrémités et obtenir une forme en tore. Le corps central obtenu peut alors être recouvert d'une ou de plusieurs enveloppes pour obtenir un joint torique à faible raideur selon l'invention. Le matériau de l'enveloppe est choisi de préférence dans la gamme des métaux ductiles tels que l'indium, l'étain, le plomb, l'or, l'aluminium ou leurs alliages.

L'ouverture du ressort spiral peut être orientée indifféremment selon les applications et doit, dans tous les cas, ne pas s'opposer à l'écrasement par enroulement.

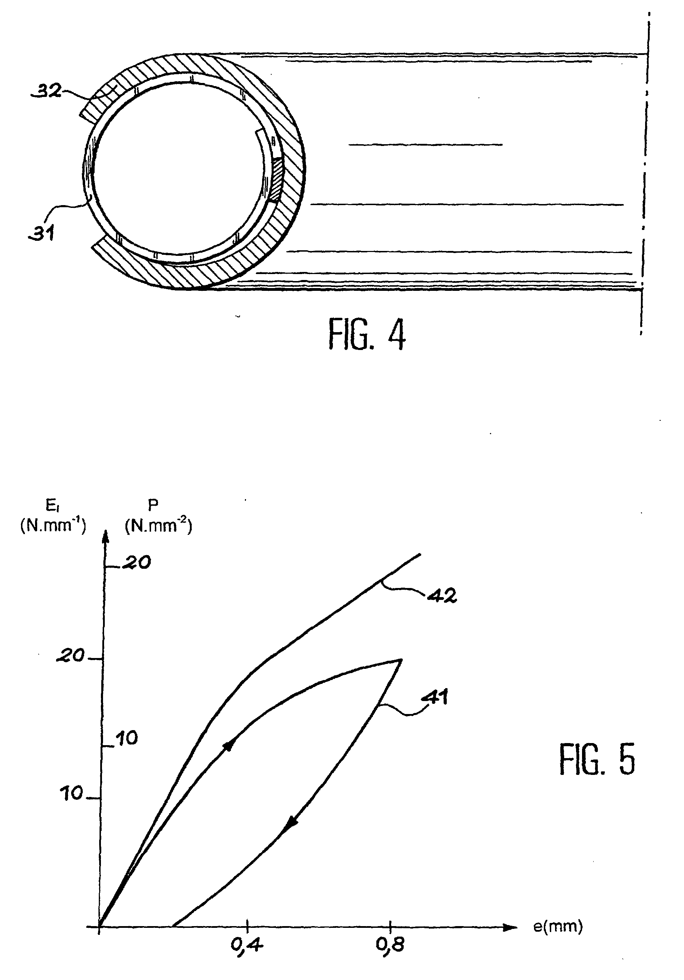

La figure 4 illustre un joint torique achevé selon l'invention. Il est représenté en vue partielle et en coupe. La coupe montre le corps métallique central 31 à éléments constituant des ressorts spiraux, par exemple du type de la première variante de réalisation décrite plus haut. Ce corps métallique central 31 est encastré dans une enveloppe 32 en métal ductile et dont le cercle générateur est ouvert.

Le diagramme caractéristique d'un tel joint est donné à la figure 5. Par comparaison avec le diagramme relevé pour un joint selon l'art connu et représenté à la figure 1, on constate que le cycle compression-décompression, décrit par la courbe 41, présente une faible déformation permanente après décompression. En effet, contrairement au ressort des joints de l'art connu, qui s'ovalise, le ressort spiral du joint selon l'invention reste pratiquement dans la phase élastique du ressort. D'autre part, la pression spécifique de contact à l'interface, décrite par la courbe 42, est toujours strictement croissante, donc sans risque vis-à-vis d'une éventuelle dégradation de l'étanchéité due à un écrasement excessif.

Ce type de joint d'étanchéité peut notamment être utilisé :
- dans les installations de traitement de surface par voies PVD (Physical Vapour Deposition) et CVD (Chemical Vapour Deposition) pour l'industrie du semi-conducteur ;
- dans l'industrie du vide et de l'ultravide et en particulier les accélérateurs et les laboratoires de physiques expérimentales ;
- de manière plus générale, toutes les installations qui utilisent des joints élastomères comme éléments d'étanchéité statique, l'invention remplaçant avantageusement les joints élastomères en limitant les risques de pollution, en éliminant le phénomène de dégazage et de vieillissement, et ceci, sans modifier la capacité de serrage de l'assemblage.

## Revendications

1. Joint torique d'étanchéité du type métallique composite possédant un corps central métallique creux en forme de tore (31) et au moins une feuille métallique (32) enveloppant ce corps central, le corps central (31) étant constitué d'une succession de moyens formant ressort spiral avec recouvrement et disposés selon des circonférences de cercles méridiens du tore, ces moyens formant ressort spiral étant juxtaposés mais non jointifs, **caractérisé en ce que** lesdits moyens formant ressort spiral sont constitués de bandes parallèles (14), enroulées sur elles-mêmes et dont les faces principales donnent au corps central sa forme en tore.

2. Joint torique d'étanchéité selon la revendication 1, **caractérisé en ce que** les bandes parallèles (14) sont reliées entre elles par une continuité métallique (15).

3. Joint torique d'étanchéité selon la revendication 2, **caractérisé en ce que** les bandes parallèles (14) et la continuité métallique (15) donnent une forme en peigne au corps central lorsqu'il est déployé à plat.

4. Joint torique d'étanchéité du type métallique composite possédant un corps central métallique creux en forme de tore (31) et au moins une feuille métallique (32) enveloppant ce corps central, le corps central (31) étant constitué d'une succession de moyens formant ressort spiral avec recouvrement et disposés selon des circonférences de cercles méridiens du tore, ces moyens formant ressort spiral étant juxtaposés mais non jointifs, **caractérisé en ce que** les moyens formant ressort spiral sont constitués de fils métalliques, lesdits fils métalliques étant des parties façonnées d'une même longueur de fil (21) qui, si cette longueur de fil est déployée à plat, constituent les parties rectilignes (25, 26) d'une configuration en lacet (20), cette configuration en lacet (20) étant enroulée sous forme d'un cylindre (28) et les extrémités de ce cylindre étant réunies pour constituer ledit tore.

5. Procédé de fabrication d'un joint torique d'étanchéité du type métallique composite, comprenant une étape de réalisation d'un corps central métallique creux en forme de tore et une étape consistant à envelopper ce corps central d'au moins une feuille métallique, **caractérisé en ce que** l'étape de réalisation du corps central comporte les opérations suivantes :
- découpe partielle d'une feuille métallique (11) de dimensions appropriées pour obtenir des bandes parallèles (14) réunies entre elles par une continuité métallique (15) disposée perpendiculairement auxdites bandes (14),
- enroulement de la feuille métallique (11) sur elle-même autour d'un axe (12) parallèle à la feuille métallique et perpendiculaire auxdites bandes (14) pour obtenir un cylindre (16) et jusqu'à recouvrement des bandes (14) sur elles-mêmes,
- réunion des deux extrémités du cylindre (16) pour obtenir la forme en tore du corps métallique central.

6. Procédé de fabrication d'un joint torique d'étanchéité du type métallique composite, comprenant une étape de réalisation d'un corps central métallique creux en forme de tore et une étape consistant à envelopper ce corps central d'au moins une feuille métallique, **caractérisé en ce que** l'étape de réalisation du corps central comporte les opérations suivantes :
- mise en forme d'une longueur de fil métallique (21) pour obtenir une configuration en lacet (20) comportant des parties rectilignes(25, 26) sensiblement parallèles entre elles, lorsque la longueur de fil (21) est à plat, et des parties de liaison (27) pour relier chaque partie rectiligne à la partie rectiligne précédente et à la partie rectiligne suivante,
- enroulement de la configuration (20) obtenue précédemment sur elle-même, autour d'un axe (24) parallèle à la longueur de fil formé et perpendiculaire auxdites parties rectilignes (25, 26) pour obtenir un cylindre (28) avec enchevêtrement alterné des parties de liaison (27),
- réunion des deux extrémités du cylindre (28) pour obtenir la forme en tore du corps métallique central.

## Patentansprüche

1. Metallische Verbundfederdichtung mit einem hohlen Zentralkörper von torischer Form (31) und wenigstens einem diesen Zentralkörper umgebenden Metallblatt (32), wobei der Zentralkörper (31) gebildet wird durch eine Folge von Spiralfeder-bildenden Einrichtungen mit Überdeckung und angeordnet gemäß Umfängen von meridianen Kreisen des Torus, wobei diese Spiralfeder-bildenden Einrichtungen nebeneinander liegen aber nicht aneinandergrenzen,
**dadurch gekennzeichnet,**
**dass** die genannten Spiralfeder-bildenden Einrichtungen durch parallele Streifen (14) gebildet werden, die auf sich selbst aufgerollt sind und deren Hauptflächen dem Zentralkörper seine torische Form geben.

2. Verbundfederdichtung nach Anspruch 1, **dadurch gekennzeichnet, dass** die parallelen Streifen (14) miteinander verbunden sind durch einen durchgehenden metallischen Teil (15).

3. Verbundfederdichtung nach Anspruch 2, **dadurch gekennzeichnet, dass** die parallelen Streifen (14) und der durchgehende metallische Teil (15) dem Zentralkörper, wenn er flach ausgebreitet ist, die Form eines Kamms geben.

4. Metallische Verbundfederdichtung mit einem hohlen Zentralkörper von torischer Form (31) und wenigstens einem diesen Zentralkörper umgebenden Metallblatt (32), wobei der Zentralkörper (31) gebildet wird durch eine Folge von Spiralfeder-bildenden Einrichtungen mit Überdeckung und angeordnet gemäß Umfängen von meridianen Kreisen des Torus, wobei diese Spiralfeder-bildenden Einrichtungen nebeneinander liegen aber nicht aneinandergrenzen, **dadurch gekennzeichnet**, die genannten Spiralfeder-bildenden Einrichtungen durch Metalldrähte gebildet werden, wobei diese Metalldrähte zugeschnittene Stücke mit einer selben Drahtlänge (21) sind, die, wenn diese Drahtlänge flach ausgebreitet ist, geradlinige Teile (25, 26) mit einer Schlangenkonfiguration (20) aufweisen und diese Schlangenkonfiguration (20) aufgerollt wird in Form eines Zylinders (28) und die Enden dieses Zylinders miteinander verbünden werden, um den genannten Torus zu bilden.

5. Verfahren zur Herstellung einer metallischen Verbundfederdichtung mit einem Schritt zum Herstellen eines torusförmigen hohlen metallischen Zentralkörpers und einem Schritt zum Umhüllen dieses Zentralkörpers mit wenigstens einem Metallblatt, **dadurch gekennzeichnet, dass** der Schritt zum Herstellen des Zentralkörpers die folgenden Operationen umfasst:
- partielles Zuschneiden eines Metallblatts (11) mit geeigneten Abmessungen, um parallele Streifen (14) zu erhalten, die durch einen senkrecht zu diesen Streifen (14) verlaufenden, durchgehenden metallischen Teil (15) miteinander verbunden sind,
- Aufrollen des Metallblatts (11) auf sich selbst um eine Achse (12), parallel zu dem Metallblatt und senkrecht zu den genannten Streifen (14), um einen Zylinder (16) zu erhalten und bis sich die Streifen selbst überdecken,
- Verbinden der beiden Enden des Zylinders (16), um die Torusform des metallischen Zentralkörpers zu erhalten.

6. Verfahren zur Herstellung einer metallischen Verbundfederdichtung mit einem Schritt zum Herstellen eines torusförmigen hohlen metallischen Zentralkörpers und einem Schritt zum Umhüllen dieses Zentralkörpers mit wenigstens einem Metallblatt, **dadurch gekennzeichnet, dass** der Schritt zum Herstellen des Zentralkörpers die folgenden Operationen umfasst:
- Formen einer Metalldrahtlänge (21), um eine Schlangenkonfirmation (20) zu erhalten, geradlinige. Teile (25, 26) umfassend, im Wesentlichen parallel zueinander, wenn die Drahtlänge (21) flach ausgebreitet ist, und Verbindungsteile (27), um jeden geradlinigen Teil mit dem vorangehenden geradlinigen Teil und dem nachfolgenden geradlinigen Teil zu verbinden,
- Aufrollen der vorhergehend erlangten Konfiguration (20) auf sich selbst, um eine Achse (24) herum, die parallel ist zu der geformten Drahtlänge und senkrecht zu den genannten geradlinigen Teilen (25, 26), um einen Zylinder (28) mit abwechselnder Verschachtelung bzw. Verkeilung der Verbindungsteile (27) zu erhalten,
- Verbinden der beiden Enden des Zylinders (28), um die Torusform des metallischen Zentralkörpers herzustellen.

## Claims

1. Sealing O-ring of the composite metallic type having a hollow, toroidal, metallic central body (31) and at least one metal sheet (32) enveloping said central body, which is constituted by a succession of means forming a spiral spring with overlap and arranged in accordance with the circumferences of the meridian circles of the torus, said means forming a spiral spring being juxtaposed, but non-contiguous, **characterized in that** said means forming the spiral spring are constituted by parallel strips (14), wound onto themselves and whereof the main surfaces give the toroidal shape to the central body.

2. Sealing O-ring according to claim 1, **characterized in that** the parallel strips (14) are interconnected by a metallic continuity (15).

3. Sealing O-ring according to claim 2, **characterized in that** the parallel strips (14) and the metallic continuity (15) give a comb shape to the central body when it is opened out flat.

4. Sealing O-ring of the composite metallic type having a hollow, toroidal, metallic, central body (31) and at least one metal sheet (32) enveloping said central body (31), which is constituted by a succession of means forming a spiral spring with overlap and arranged in accordance with the circumferences of meridian circles of the torus, said means forming a spiral spring being juxtaposed, but non-contiguous, **characterized in that** the means forming the spiral spring are constituted by metal wires, which are parts fashioned from a same wire length (21) which, when said wire length is opened out flat, constitute the rectilinear parts (25, 26) of a loop configuration (20), which is wound in the form of a cylinder (28) and the ends of said cylinder are joined to form said torus.

5. Process for the production of a sealing O-ring of the composite metallic type comprising a step of producing a hollow, toroidal, metal, central body and a step consisting of enveloping said central body with at least one metal sheet, **characterized in that** the step of producing the central body involves the following operations:
- partial cutting of a metal sheet (11) having appropriate dimensions to obtain parallel strips (14), which are interconnected by a metallic continuity (15) positioned perpendicular to said strips (14),
- winding the metal sheet (11) onto itself about an axis (12) parallel to the metal sheet and perpendicular to said strips (14) in order to obtain a cylinder (16) and until the strips (14) are overlapped on themselves,
- joining the two ends of the cylinder (16) to obtain the toroidal shape of the central metal body.

6. Process for the production of a sealing O-ring of the composite metallic type comprising a step of producing a hollow, toroidal, metal, central body and a step consisting of enveloping said central body with at least one metal sheet, **characterized in that** the step of producing the central body involves the following operations:
- shaping a metal wire length (21) to obtain a loop configuration (20) having substantially parallel rectilinear portions (25, 26), when the wire length (21) is flat, and connecting portions (27) for connecting said rectilinear portion to the preceding rectilinear portion and to the following rectilinear portion,
- winding the previously obtained configuration (20) onto itself about an axis (24) parallel to the wire length formed and perpendicular to said rectilinear portions (25, 26) in order to obtain a cylinder (28) with alternate interlocking of the connecting portions (27),
- joining the two ends of the cylinder (28) to obtain the toroidal shape of the central metal body.
